# EUROPEAN PATENT SPECIFICATION

(11) **EP 4 282 666 B1**
(45) Date of publication and mention of the grant of the patent: **16.07.2025**
(21) Application number: 23170643.3
(22) Date of filing: 28.04.2023
(51) Int. Cl.: B60C 11/00, B60C 11/01, B60C 11/03, B60C 3/04

(54) **TIRE**
REIFEN
PNEUMATIQUE

(30) Priority: 25.05.2022 JP 2022085080
(43) Date of publication of application: 29.11.2023
(73) Proprietor: Sumitomo Rubber Industries, Ltd., Kobe-shi, Hyogo 651-0072 (JP)
(72) Inventor: KIKUCHI, Hiroshi, Kobe-shi, 651-0072 (JP); NAGASE, Masahiro, Kobe-shi, 651-0072 (JP); MAKINO, Shota, Kobe-shi, 651-0072 (JP)
(74) Representative: Manitz Finsterwald Patent- und Rechtsanwaltspartnerschaft mbB

(56) References cited:
- EP-A1- 1 666 277
- EP-A1- 3 845 396
- CN-U- 204 955 929
- JP-A- 2020 100 205

## Description

### BACKGROUND OF THE INVENTION

### Field of the Invention

The present invention relates to a tire. Specifically, the present invention relates to a tire that is mounted to a passenger car.

### Background Art

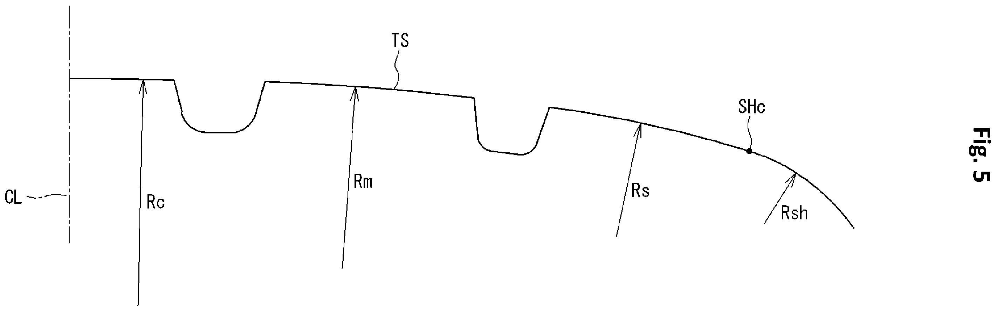

FIG. 5 shows a contour line of a tread surface TS in a meridian cross-section. The contour line of the tread surface TS is formed by combining a plurality of arcs in an axial direction. The arcs forming the contour line shown in FIG. 5 include a center arc, a middle arc, a side arc, and a shoulder arc from an equator plane CL toward the axially outer side. The center arc has a largest radius Rc. The middle arc has a next largest radius Rm. The side arc has a next largest radius Rs. The shoulder arc has a smallest radius Rsh. A contour line of a side surface is connected to the shoulder arc.

In the contour line of the tread surface TS, the radius of curvature changes at the boundaries between the adjacent arcs. In the contour line of the tread surface TS, the boundary at which the rate of change of the radius of curvature is the largest is the boundary between the side arc and the shoulder arc (hereinafter, referred to as reference boundary SHc).

From consideration for the environment, reduction of rolling resistance is required for tires that are mounted to vehicles. Therefore, for example, decreasing the number of components included in a tire, decreasing the thicknesses of the components, using materials having low energy loss, specifically, rubbers having a low loss tangent (hereinafter, referred to as low loss rubbers), as the materials forming the components, etc., are considered (for example, Japanese Laid-Open Patent Publication No. 2021-120242).

The tread of a tire includes a cap portion and a base portion. The cap portion comes into contact with a road surface. For the cap portion, a rubber for which grip performance and wear resistance are taken into consideration is used. The base portion is covered with the cap portion and does not come into contact with a road surface. For the base portion, a low loss rubber is used.

By using the low loss rubber for the cap portion, the rolling resistance of the tire can be reduced further. However, if a low loss rubber is used for the cap portion, there is a concern about a decrease in grip performance on a wet road surface. Establishment of a technology capable of achieving reduction of rolling resistance without using a low loss rubber for the cap portion is required.

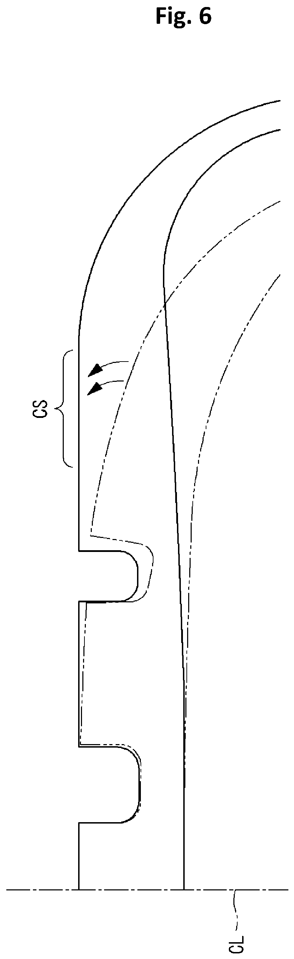

In FIG. 6, a solid line schematically shows the state of a tread portion that is in contact with a road surface. An alternate long and two short dashes line shows the state of the tread portion before (or after) the tread portion comes into contact with a road surface.

As shown in FIG. 6, the tread portion becomes significantly deformed at a shoulder portion thereof when the tread portion comes into contact with the road surface. Accordingly, compressive strain is generated at a surface layer portion, of the shoulder portion, indicated by reference character CS. The compressive strain is a factor that increases rolling resistance. If generation of compressive strain can be suppressed, it is expected that rolling resistance can be reduced further. Related technologies are known from JP 2020 100205 A, EP 3 845 396 A1, and EP 1 666 277 A1.

The present invention has been made in view of such circumstances. An object of the present invention is to provide a tire that can achieve reduction of rolling resistance without decreasing grip performance on a wet road surface.

### SUMMARY OF THE INVENTION

The contour line of a tread surface is closely related to the state of contact between a tread and a road surface. Therefore, the present inventors have conducted a thorough study for the relationship between the contour line of the tread surface and generation of compressive strain. As a result, the present inventors have found that the position of a reference boundary with respect to a ground-contact end is involved in generation of compressive strain, and thus have completed the present invention. The present invention is set out in the appended claims.

A tire according to the present invention includes: a pair of beads; a carcass extending on and between the pair of beads; a pair of sidewalls located axially outward of the carcass; a tread located radially outward of the carcass; and a belt located between the carcass and the tread. An outer surface of the tire includes a tread surface configured to come into contact with a road surface, and a pair of side surfaces connected to the tread surface. The tread surface includes an equator that is a point of intersection with an equator plane. Each of the side surfaces includes a maximum width position at which the tire has a maximum width. In a meridian cross-section of the tire, a contour line of the tread surface includes a plurality of arcs aligned in an axial direction. The plurality of arcs include a center arc passing through the equator, a pair of middle arcs connected to the center arc, a pair of side arcs connected to the middle arcs, respectively, and a pair of shoulder arcs connected to the side arcs, respectively. Contour lines of the pair of side surfaces are connected to the pair of shoulder arcs, respectively. A point of intersection of a tangent line tangent to the shoulder arc at a first end of the shoulder arc and a tangent line tangent to the shoulder arc at a second end of the shoulder arc is a tread reference end. A ground-contact end obtained by fitting the tire onto a standardized rim, adjusting an internal pressure of the tire to a standardized internal pressure, applying a load that is 80% of a standardized load, to the tire, and bringing the tire into contact with a flat surface is a reference ground-contact end. A position, on the outer surface of the tire, corresponding to the reference ground-contact end is a reference ground-contact position, and a boundary between the shoulder arc and the side arc is a reference boundary. The reference boundary is located axially outward of the reference ground-contact position. A ratio of a distance in the axial direction from the equator plane to the reference boundary to a distance in the axial direction from the equator plane to the tread reference end is not less than 0.94 and not greater than 0.98.

According to the present invention, a tire that can achieve reduction of rolling resistance without decreasing grip performance on a wet road surface is obtained.

### BRIEF DESCRIPTION OF THE DRAWINGS

FIG. 1 is a cross-sectional view showing a part of a tire according to an embodiment of the present invention;
FIG. 2 is a cross-sectional view illustrating a contour line of a tread surface;
FIG. 3 is a schematic diagram showing a ground-contact surface shape of the tire;
FIG. 4 is a cross-sectional view illustrating a positional relationship between a reference boundary and a reference ground-contact end;
FIG. 5 is a cross-sectional view illustrating a contour line of a conventional tread surface; and
FIG. 6 is a schematic diagram illustrating deformation of a tread portion due to contact with a road surface.

### DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. In the present invention, the tire fitted on the rim is a tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as a standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section (hereinafter, referred to as reference cut plane) of the tire obtained by cutting the tire along a plane including a rotation axis. In this measurement, the distance between right and left beads is set so as to be equal to the distance between the beads in the tire that is fitted on the standardized rim.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

The standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, the "tire designation" is "tyre designation" specified in JIS D4202 "Automobile tyres-Designation and dimensions".

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof. A portion of the tread portion at an end thereof is also referred to as shoulder portion.

### [Outline of Embodiments of Present Invention]

Hereinafter, the outlines of embodiments of the present invention are listed and described.

### [Configuration 1]

A tire according to an aspect of the present invention is a tire including a pair of beads, a carcass extending on and between the pair of beads, a pair of sidewalls located axially outward of the carcass, a tread located radially outward of the carcass, and a belt located between the carcass and the tread, wherein: an outer surface of the tire includes a tread surface configured to come into contact with a road surface, and a pair of side surfaces connected to the tread surface; the tread surface includes an equator that is a point of intersection with an equator plane; each of the side surfaces includes a maximum width position at which the tire has a maximum width; in a meridian cross-section of the tire, a contour line of the tread surface includes a plurality of arcs aligned in an axial direction; the plurality of arcs include a center arc passing through the equator, a pair of middle arcs connected to the center arc, a pair of side arcs connected to the middle arcs, respectively, and a pair of shoulder arcs connected to the side arcs, respectively; contour lines of the pair of side surfaces are connected to the pair of shoulder arcs, respectively; a point of intersection of a tangent line tangent to the shoulder arc at a first end of the shoulder arc and a tangent line tangent to the shoulder arc at a second end of the shoulder arc is a tread reference end; a ground-contact end obtained by fitting the tire onto a standardized rim, adjusting an internal pressure of the tire to a standardized internal pressure, applying a load that is 80% of a standardized load, to the tire, and bringing the tire into contact with a flat surface is a reference ground-contact end; a position, on the outer surface of the tire, corresponding to the reference ground-contact end is a reference ground-contact position; a boundary between the shoulder arc and the side arc is a reference boundary; the reference boundary is located axially outward of the reference ground-contact position; and a ratio of a distance in the axial direction from the equator plane to the reference boundary to a distance in the axial direction from the equator plane to the tread reference end is not less than 0.94 and not greater than 0.98.

By shaping the tire as described above, flattening of the portion, of the tread surface, that comes into contact with a road surface is promoted. Accordingly, generation of compressive strain, which is confirmed at a shoulder portion of a conventional tire, is suppressed. The reduction of compressive strain contributes to reduction of rolling resistance.

Even if a rubber for which grip performance on a wet road surface is taken into consideration is used for the tread, the tire can achieve reduction of rolling resistance without replacing this rubber with a low loss rubber. The tire can achieve reduction of rolling resistance without decreasing grip performance on a wet road surface.

### [Configuration 2]

In the tire described in [Configuration 1] above, a ratio of a distance in a radial direction from the equator to the reference ground-contact position to the distance in the axial direction from the equator plane to the tread reference end is not less than 0.06 and not greater than 0.15.

In the tire of [Configuration 1] described above, flattening of the tread surface is promoted. If the tread surface becomes excessively flat, the thickness of the tread at a shoulder portion increases. In this case, there is a concern that ground-contact pressure near the ground-contact end may locally increase and uneven wear may occur. There is also a concern that even though reduction of rolling resistance is enabled by the reduction of compressive strain, the thick tread may cause an increase in rolling resistance.

However, by shaping the tire as in [Configuration 2], the tread surface does not become excessively flat, and the tread at the shoulder portion is formed with an appropriate thickness. The tire can achieve reduction of rolling resistance while maintaining good uneven wear resistance. Even if a rubber for which grip performance on a wet road surface is taken into consideration is used for the tread, it is not necessary to replace this rubber with a low loss rubber. The tire can achieve reduction of rolling resistance without decreasing grip performance on a wet road surface, while maintaining good uneven wear resistance.

### [Configuration 3]

Preferably, in the tire described in [Configuration 1] or [Configuration 2] above, a ratio of a radius of the middle arc to a radius of the side arc is not less than 2.1 and not greater than 2.7.

Even in a flat tread surface that enables reduction of compressive strain, if a rate of change of the radius of curvature of the contour line of the tread surface is large at the boundary between a middle arc and a side arc, there is a concern that the tread surface may be likely to slip against a road surface at a ground-contact surface thereof. Slip of the tread surface against a road surface promotes occurrence of uneven wear. On the other hand, if the rate of change of the radius of curvature is small, the thickness of the tread at the shoulder portion increases. Thus, in this case as well, occurrence of uneven wear is promoted.

However, by shaping the tire as in [Configuration 3], slip of the tread surface against a road surface can be suppressed, and the tread at the shoulder portion can be formed with an appropriate thickness in the tire. The tire can achieve reduction of rolling resistance while maintaining good uneven wear resistance. Even if a rubber for which grip performance on a wet road surface is taken into consideration is used for the tread, it is not necessary to replace this rubber with a low loss rubber. The tire can achieve reduction of rolling resistance without decreasing grip performance on a wet road surface, while maintaining good uneven wear resistance.

### [Details of Embodiments of Present Invention]

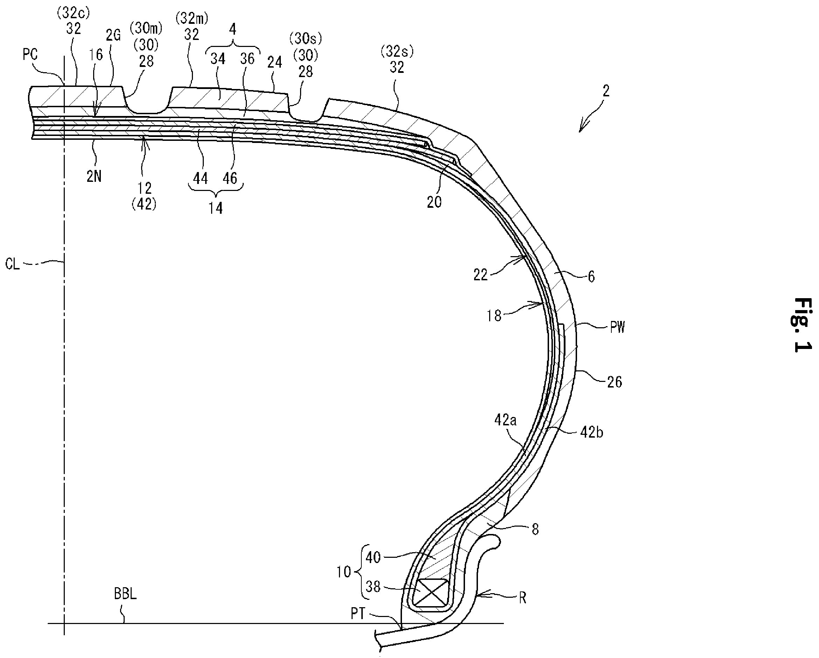

FIG. 1 shows a part of a tire 2 according to an embodiment of the present invention. The tire 2 is a pneumatic tire for a passenger car.

FIG. 1 shows a part of a cross-section (hereinafter, referred to as meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, the tire 2 is fitted on a rim R (standardized rim). The interior of the tire 2 is filled with air to adjust the internal pressure of the tire 2.

In FIG. 1, a solid line BBL extending in the axial direction is a bead base line. The bead base line BBL is a line that defines the rim diameter (see JATMA or the like) of the rim R.

In FIG. 1, a position indicated by reference character PC is the point of intersection of an outer surface 2G (specifically, a tread surface described later) of the tire 2 and the equator plane CL. The point of intersection PC is the equator of the tire 2. In the case where a groove is located on the equator plane CL, the equator PC is specified on the basis of a virtual outer surface (virtual tread surface described later) obtained on the assumption that no groove is provided thereon. The equator PC is a radially outer end of the tire 2.

In FIG. 1, a position indicated by reference character PW is an axially outer end (hereinafter, referred to as outer end PW) of the tire 2. In the case where decorations such as patterns and letters are present on the outer surface 2G of the tire 2, the outer end PW is specified on the basis of a virtual outer surface obtained on the assumption that the decorations are not present thereon.

The distance in the axial direction, from a first outer end PW to a second outer end PW, obtained in the standardized state is the maximum width of the tire 2. Each outer end PW is also referred to as maximum width position. The maximum width position is a position at which the tire 2 has the maximum width. The maximum width obtained in the standardized state is the cross-sectional width (see JATMA or the like) of the tire 2.

In FIG. 1, a position indicated by reference character PT is a toe of the tire 2. The toe PT is the boundary between the outer surface 2G and an inner surface 2N of the tire 2.

The tire 2 includes a tread 4, a pair of sidewalls 6, a pair of clinches 8, a pair of beads 10, a carcass 12, a belt 14, a band 16, an inner liner 18, a pair of cushions 20, and a pair of insulations 22 as components thereof.

The tread 4 comes into contact with a road surface at a tread surface 24 thereof. The tread 4 has the tread surface 24 which comes into contact with a road surface. The tread 4 is located radially outward of the carcass 12 described later. The tread surface 24 is a part of the outer surface 2G of the tire 2. A side surface 26 is connected to the tread surface 24. The outer surface 2G of the tire 2 includes the tread surface 24 and a pair of side surfaces 26.

The tread surface 24 includes the equator PC, and each side surface 26 includes the maximum width position PW.

Grooves 28 are formed on the tread 4. Accordingly, a tread pattern is formed.

The grooves 28 include a circumferential groove 30 continuously extending in the circumferential direction. In the tire 2, a plurality of circumferential grooves 30 are formed on the tread 4 so as to be aligned in the axial direction.

On the tread 4 shown in FIG. 1, four circumferential grooves 30 are formed. Among the four circumferential grooves 30, the circumferential groove 30 located on each outermost side in the axial direction is a shoulder circumferential groove 30s. The circumferential groove 30 located axially inward of the shoulder circumferential groove 30s is a middle circumferential groove 30m.

A plurality of land portions 32 are formed by forming the circumferential grooves 30 on the tread 4. In the tread 4 shown in FIG. 1, five land portions 32 are formed. Among the five land portions 32, the land portion 32 located on each outermost side in the axial direction is a shoulder land portion 32s. The land portion 32 located axially inward of the shoulder land portion 32s is a middle land portion 32m. The land portion 32 located axially inward of the middle land portion 32m is a center land portion 32c. The center land portion 32c includes the equator PC.

The tread 4 includes a cap portion 34 and a base portion 36. The cap portion 34 includes the tread surface 24. The cap portion 34 is formed from a crosslinked rubber for which wear resistance and grip performance are taken into consideration. The base portion 36 is located radially inward of the cap portion 34. The entirety of the base portion 36 is covered with the cap portion 34. The base portion 36 is formed from a crosslinked rubber that has low heat generation properties.

Each sidewall 6 is connected to the tread 4. The sidewall 6 is located radially inward of the tread 4. The sidewall 6 is located axially outward of the carcass 12. The sidewall 6 is formed from a crosslinked rubber for which cut resistance is taken into consideration. The sidewall 6 forms a part of the side surface 26.

Each clinch 8 is located radially inward of the sidewall 6. The clinch 8 comes into contact with the rim R. The clinch 8 is formed from a crosslinked rubber for which wear resistance is taken into consideration.

Each bead 10 is located axially inward of the clinch 8. The bead 10 is located radially inward of the sidewall 6.

The bead 10 includes a core 38 and an apex 40. The core 38 extends in the circumferential direction. The core 38 includes a steel wire which is not shown. The apex 40 is located radially outward of the core 38. The apex 40 is formed from a crosslinked rubber that has high stiffness.

The carcass 12 is located inward of the tread 4, the pair of sidewalls 6, and the pair of clinches 8. The carcass 12 extends on and between the pair of beads 10.

The carcass 12 includes at least one carcass ply 42. The carcass ply 42 includes a large number of carcass cords aligned with each other, which are not shown. These carcass cords intersect the equator plane CL. The carcass 12 of the tire 2 has a radial structure. In the tire 2, a cord formed from an organic fiber is used as each carcass cord. Examples of the organic fiber include nylon fibers, rayon fibers, polyester fibers, and aramid fibers.

The carcass ply 42 includes a ply body 42a and a pair of turned-up portions 42b. The ply body 42a extends between a first bead 10 and a second bead 10. The respective turned-up portions 42b are connected to the ply body 42a and turned up from the inner side toward the outer side in the axial direction at the respective beads 10.

The belt 14 is located radially inward of the tread 4. The belt 14 is stacked on the carcass 12. The belt 14 is located between the carcass 12 and the tread 4. The above-described equator plane CL intersects the belt 14 at the center of the axial width of the belt 14.

In the tire 2, the axial width of the belt 14 is not less than 85% and not greater than 100% of the width of the tread 4. The width of the tread 4 is twice a reference width HTW described later.

The belt 14 includes an inner layer 44 and an outer layer 46. The inner layer 44 is located radially outward of the ply body 42a and is stacked on the ply body 42a. The outer layer 46 is located radially outward of the inner layer 44 and is stacked on the inner layer 44.

As shown in FIG. 1, an end of the outer layer 46 is located axially inward of an end of the inner layer 44. The outer layer 46 is narrower than the inner layer 44. The length from the end of the outer layer 46 to the end of the inner layer 44 is not less than 3 mm and not greater than 10 mm. The above-described axial width of the belt 14 is represented as the axial width of the wider inner layer 44.

Each of the inner layer 44 and the outer layer 46 includes a large number of belt cords aligned with each other, which are not shown. Each belt cord is tilted relative to the equator plane CL. The material of the belt cord is steel.

The band 16 is stacked on the belt 14 on the inner side of the tread 4. An end of the band 16 is located axially outward of an end of the belt 14. The length from the end of the belt 14 to the end of the band 16 is not less than 3 mm and not greater than 7 mm.

The above-described equator plane CL intersects the band 16 at the center of the axial width of the band 16. Both ends of the band 16 are located so as to be opposed to each other across the equator plane CL. The band 16 is a full band. The band 16 may be composed of a pair of edge bands that are disposed so as to be spaced apart from each other in the axial direction with the equator plane CL therebetween and that are each formed so as to cover a portion of the belt 14 at the end thereof. The band 16 may be composed of a full band and a pair of edge bands.

The band 16 includes a helically wound band cord which is not shown. In the band 16, the band cord extends substantially in the circumferential direction. Specifically, an angle of the band cord with respect to the circumferential direction is not greater than 5°. The band 16 has a jointless structure. A cord formed from an organic fiber is used as the band cord. Examples of the organic fiber include nylon fibers, rayon fibers, polyester fibers, and aramid fibers.

The inner liner 18 is located inward of the carcass 12. The inner liner 18 forms the inner surface 2N of the tire 2. The inner liner 18 is formed from a crosslinked rubber that has an excellent air blocking property. The inner liner 18 maintains the internal pressure of the tire 2.

The respective cushions 20 are located so as to be spaced apart from each other in the axial direction. Each cushion 20 is located between the ends of the belt 14 and the band 16 and the carcass 12. The cushion 20 is formed from a crosslinked rubber that has low stiffness. In the tire 2, the cushions 20 are not essential components. Depending on the specifications of the tire 2, the cushions 20 may not necessarily be provided.

Each insulation 22 is located between the carcass 12 and the inner liner 18. A first end of the insulation 22 is located axially inward of the end of the belt 14. A second end of the insulation 22 is located between the maximum width position PW and the bead 10 in the radial direction.

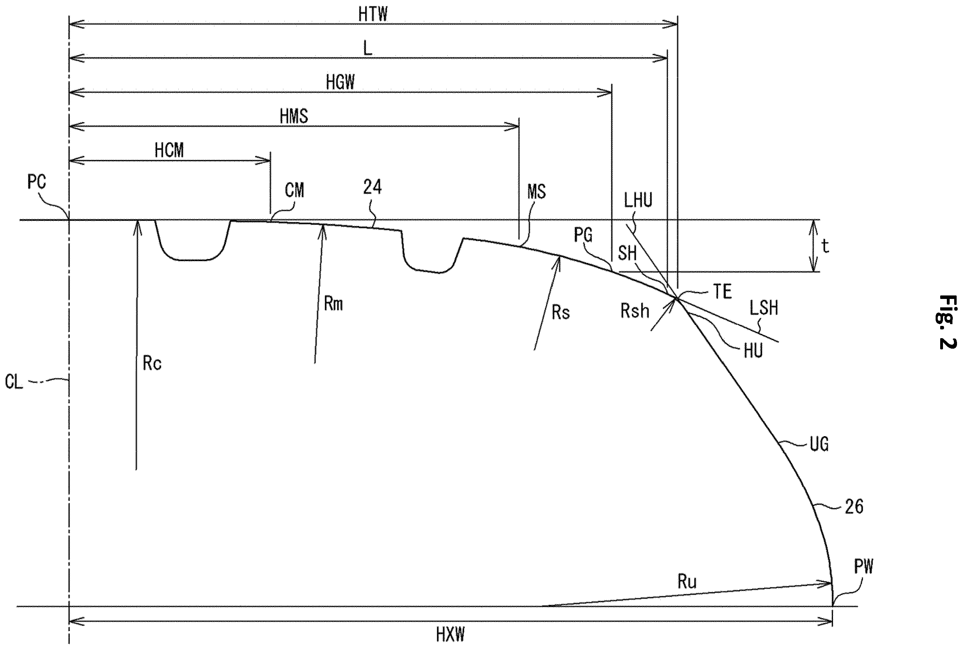

FIG. 2 shows a part of a contour line of the outer surface 2G of the tire 2 in the meridian cross-section. The contour line of the outer surface 2G is represented by a virtual outer surface obtained on the assumption that no grooves and no decorations such as patterns and letters are present thereon.

Although not described in detail, in the present invention, the contour line of the outer surface 2G is obtained by measuring the outer surface shape of the tire 2 in the standardized state, for example, using a displacement sensor.

A contour line of the tread surface 24 in the meridian cross-section includes a plurality of arcs aligned in the axial direction. Specifically, the contour line of the tread surface 24 is composed of a plurality of arcs aligned in the axial direction.

The plurality of arcs include a center arc, a pair of middle arcs, a pair of side arcs, and a pair of shoulder arcs.

The center arc is the arc located at the center in the axial direction among the plurality of arcs. In FIG. 2, an arrow indicated by reference character Rc represents the radius of the center arc. The center arc passes through the equator PC. The center of the center arc is located on the equator plane CL.

Each middle arc is the arc located axially outward of the center arc. In FIG. 2, an arrow indicated by reference character Rm represents the radius of the middle arc. The middle arc has the next largest radius Rm after the radius Rc of the center arc.

Each side arc is the arc located axially outward of the middle arc. In FIG. 2, an arrow indicated by reference character Rs represents the radius of the side arc. The side arc has the next largest radius Rs after the radius Rm of the middle arc.

Each shoulder arc is the arc located axially outward of the side arc. In FIG. 2, an arrow indicated by reference character Rsh represents the radius of the shoulder arc. The shoulder arc has the next largest radius Rsh after the radius Rs of the side arc.

In the tire 2, the center arc is the arc located at the center in the axial direction among the plurality of arcs. The center arc has the largest radius Rc among the plurality of arcs included in the contour line of the tread surface 24. The shoulder arc is the arc located on the outermost side in the axial direction among the plurality of arcs. The shoulder arc has the smallest radius Rsh among the plurality of arcs included in the contour line of the tread surface 24.

The middle arc is connected to the center arc. In FIG. 2, a position indicated by reference character CM is the boundary between the center arc and the middle arc. The middle arc is tangent to the center arc at the boundary CM. The boundary CM is an end of the center arc and is also a first end of the middle arc.

The side arc is connected to the middle arc. In FIG. 2, a position indicated by reference character MS is the boundary between the middle arc and the side arc. The side arc is tangent to the middle arc at the boundary MS. The boundary MS is a second end of the middle arc and is also a first end of the side arc.

The shoulder arc is connected to the side arc. In FIG. 2, a position indicated by reference character SH is the boundary between the side arc and the shoulder arc. The shoulder arc is tangent to the side arc at the boundary SH. The boundary SH is a second end of the side arc and is also a first end of the shoulder arc.

The contour line of the tread surface 24 of the tire 2 is composed of seven arcs that include the center arc, the pair of middle arcs, the pair of side arcs, and the pair of shoulder arcs.

In the present invention, among arcs that have a center on the equator plane CL and that include the equator PC, an arc that has the largest overlap length with the contour line of the tread surface 24 may be specified as the center arc, an end of this arc may be specified as the boundary CM, and the radius of this arc may be used as the radius Rc of the center arc. Among arcs that have a center on a straight line passing through the boundary CM and the center of the center arc and that include the boundary CM, an arc that has the largest overlap length with the contour line of the tread surface 24 may be specified as the middle arc, the outer end of this arc may be specified as the boundary MS, and the radius of this arc may be used as the radius Rm of the middle arc. Among arcs that have a center on a straight line passing through the boundary MS and the center of the middle arc and that include the boundary MS, an arc that has the largest overlap length with the contour line of the tread surface 24 may be specified as the side arc, the outer end of this arc may be specified as the boundary SH, and the radius of this arc may be used as the radius Rs of the side arc. Among arcs that have a center on a straight line passing through the boundary SH and the center of the side arc and that include the boundary SH, an arc that has the largest overlap length with the contour line of the tread surface 24 may be specified as the shoulder arc, the outer end of this arc may be specified as a boundary HU, and the radius of this arc may be used as the radius Rsh of the shoulder arc.

In the tire 2, a contour line of each side surface 26 is connected to the shoulder arc. In FIG. 2, a position indicated by reference character HU is the boundary between the shoulder arc and the contour line of the side surface 26. The contour line of the side surface 26 is tangent to the shoulder arc at the boundary HU. The boundary HU is a second end of the shoulder arc and is also a first end of the contour line of the side surface 26. A second end of the contour line of the side surface 26 is the toe PT of the tire 2.

In FIG. 2, a straight line indicated by reference character LSH is a first tangent line that is tangent to the shoulder arc at the first end SH of the shoulder arc. A straight line indicated by reference character LHU is a second tangent line that is tangent to the shoulder arc at the second end HU of the shoulder arc. A position indicated by reference character TE is the point of intersection of the first tangent line LSH and the second tangent line LHU. In the present invention, the point of intersection TE is a tread reference end.

In FIG. 2, a length indicated by reference character HTW is the distance in the axial direction from the equator plane CL to the tread reference end TE. In the present invention, the distance HTW in the axial direction is the reference width of the tread 4. A length indicated by reference character HXW is the distance in the axial direction from the equator plane CL to the maximum width position PW. In the present invention, the distance HXW in the axial direction is a reference cross-sectional width. Twice the reference cross-sectional width HXW is the above-described cross-sectional width of the tire 2.

In the tire 2, the ratio (HTW/HXW) of the reference width HTW of the tread 4 to the reference cross-sectional width HXW is not less than 70% and not greater than 80%.

In FIG. 2, a length indicated by reference character HCM is the distance in the axial direction from the equator plane CL to the boundary CM. A length indicated by reference character HMS is the distance in the axial direction from the equator plane CL to the boundary MS.

In the tire 2, the ratio (HCM/HTW) of the distance HCM in the axial direction to the reference width HTW of the tread 4 is preferably not less than 0.25 and not greater than 0.35. The ratio (HMS/HTW) of the distance HMS in the axial direction to the reference width HTW of the tread 4 is preferably not less than 0.65 and not greater than 0.75.

The contour line of the side surface 26 includes at least one arc. The contour line of the side surface 26 includes an upper arc. The upper arc is an arc that includes the maximum width position PW and that extends from the maximum width position PW toward the tread reference end TE side. The upper arc is an arc that is convex outward, and the center thereof is located on a straight line that passes through the maximum width position PW and that extends in the axial direction. In FIG. 2, a position indicated by reference character UG is an outer end of the upper arc. In FIG. 2, an arrow indicated by reference character Ru represents the radius of the upper arc.

In the tire 2, the above-described boundary HU and the outer end UG are connected by a straight line. The straight line is tangent to the shoulder arc at the boundary HU and is tangent to the upper arc at the outer end UG. The position of the boundary HU and the position of the outer end UG may coincide with each other. In this case, the upper arc is directly connected to the shoulder arc.

The farther the outer end UG of the upper arc is located from the boundary HU, the more the volume of the rubber at a shoulder portion can be reduced. The reduction of the rubber volume contributes to reduction of rolling resistance. From this viewpoint, in the contour line of the outer surface 2G, the boundary HU and the outer end UG are preferably connected by a straight line.

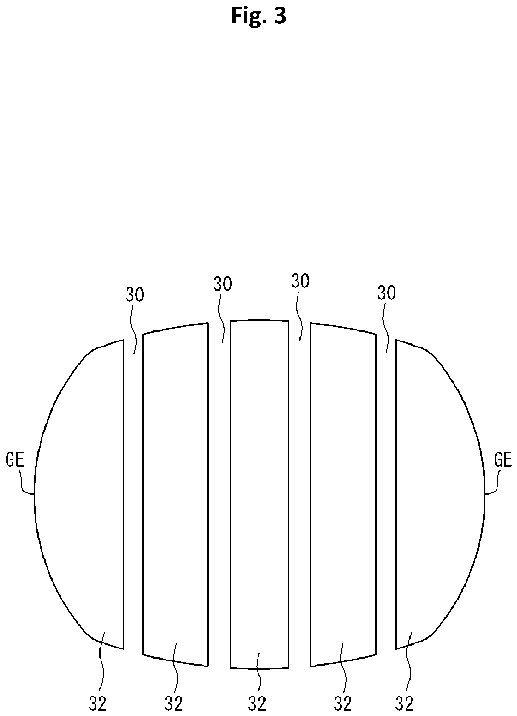

FIG. 3 shows a ground-contact surface shape of the tire 2. In FIG. 3, the right-left direction corresponds to the axial direction of the tire 2. The up-down direction corresponds to the circumferential direction of the tire 2.

A ground-contact surface is obtained, using a tire ground-contact surface shape measuring device (not shown), by applying a predetermined load to the tire 2 in the standardized state and bringing the tire 2 into contact with a flat surface. The ground-contact surface shape shown in FIG. 3 is obtained by tracing the contour of each land portion 32 included in the ground-contact surface. To obtain the ground-contact surface, the tire 2 is placed such that the axial direction thereof is parallel to a road surface. The above-described load is applied to the tire 2 in a direction perpendicular to the road surface. In other words, a vertical load is applied to the tire 2 in a state where the camber angle of the tire 2 is set to 0°.

In FIG. 3, each position indicated by reference character GE is an axially outer end (also referred to as ground-contact end) of the ground-contact surface. In the present invention, each axially outer end GE of a ground-contact surface of the tire 2 obtained by applying a load that is 80% of the standardized load, to the tire 2 in the standardized state, and bringing the tire 2 into contact with a flat surface, is a reference ground-contact end. The position, on the outer surface 2G of the tire 2, corresponding to the reference ground-contact end GE is a reference ground-contact position. In FIG. 2, a position indicated by reference character PG is the reference ground-contact position.

In FIG. 2, a length indicated by reference character HGW is the distance in the axial direction from the equator plane CL to the reference ground-contact position PG. In the tire 2, the ratio of the distance HGW in the axial direction to the reference width HTW of the tread 4 is set in the range of not less than 0.88 and not greater than 0.92.

In the tire 2, the plurality of arcs included in the contour line of the tread surface 24 have different radii. The radius of curvature of the contour line of the tread surface 24 changes at the boundaries between the adjacent arcs.

As described above, each shoulder arc is the arc located on the outermost side in the axial direction among the plurality of arcs included in the contour line of the tread surface 24, and has the smallest radius Rsh. The contour line of the side surface 26 is connected to the shoulder arc. In the tire 2, the radius of curvature of the contour line of the tread surface 24 has the highest rate of change at the boundary SH between the shoulder arc and the side arc. In the present invention, the boundary SH between the shoulder arc and the side arc is a reference boundary. In FIG. 2, a length indicated by reference character L is the distance in the axial direction from the equator plane CL to the reference boundary SH.

The contour line of a tread surface is closely related to the state of contact between a tread and a road surface. Therefore, the present inventors have conducted a thorough study for the relationship between the contour line of the tread surface and generation of compressive strain. As a result, the present inventors have found that the position of a reference boundary with respect to a reference ground-contact end is involved in generation of compressive strain, specifically, compressive strain tends to be generated at a surface layer portion of a shoulder portion if the reference boundary is located axially inward of the reference ground-contact end position, and thus have completed the present invention.

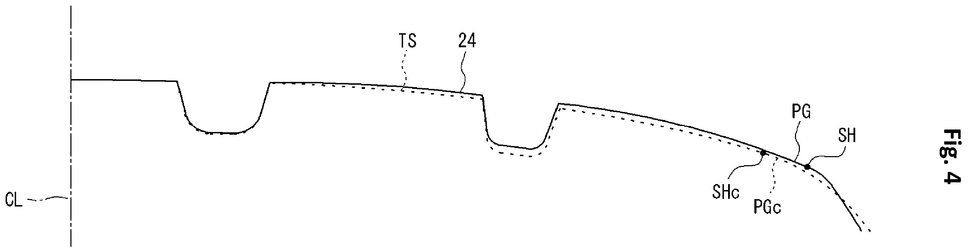

FIG. 4 shows the positional relationship between the reference boundary SH and the reference ground-contact position PG. In FIG. 4, a solid line is the contour line of the tread surface 24, and a dotted line is the contour line of a conventional tread surface TS. In the contour line of the conventional tread surface TS, a position indicated by reference character SHc is a reference boundary in the conventional tread surface TS. A position indicated by reference character PGc is a reference ground-contact position in the conventional tread surface TS.

As shown in FIG. 4, in the conventional tread surface TS, the reference boundary SHc is located axially inward of the reference ground-contact position PGc. On the other hand, in the tread surface 24 of the tire 2, the reference boundary SH is located axially outward of the reference ground-contact position PG. In the tread surface 24, the reference boundary SH at which the change in curvature of the contour line is large is not included in the ground-contact surface. In the tire 2, generation of compressive strain at the surface layer portion of the shoulder portion, which is confirmed in a conventional tire, is suppressed.

If the reference boundary SH is located axially outward away from the reference ground-contact position PG, there is a concern that the thickness of the tread 4 at the shoulder portion may increase. The increase in the thickness of the tread 4 increases rolling resistance. Thus, in this case, the rolling resistance reduction effect brought about by suppressing generation of compressive strain is canceled out.

However, in the tire 2, the ratio (L/HTW) of the distance L in the axial direction from the equator plane CL to the reference boundary SH to the distance HTW in the axial direction from the equator plane CL to the tread reference end TE is not less than 0.94 and not greater than 0.98.

Since the ratio (L/HTW) is not greater than 0.98, the reference boundary SH is located without being excessively far from the reference ground-contact position PG. The interval between the reference boundary SH and the reference ground-contact position PG is appropriately maintained, so that the tread 4 at the shoulder portion is formed with an appropriate thickness. In the tire 2, an increase in rolling resistance due to an increase in thickness can be suppressed. In the tire 2, the rolling resistance reduction effect brought about by suppressing generation of compressive strain is sufficiently exhibited. From this viewpoint, the ratio (L/HTW) is preferably not greater than 0.97.

Since the ratio (L/HTW) is not less than 0.94, the fact that the reference boundary SH is located axially outward of the reference ground-contact position PG can effectively contribute to suppressing generation of compressive strain. In the tire 2, rolling resistance caused by compressive strain is reduced. From this viewpoint, the ratio (L/HTW) is preferably not less than 0.95.

In the tire 2, the reference boundary SH is located axially outward of the reference ground-contact position PG, and the ratio (L/HTW) of the distance L in the axial direction from the equator plane CL to the reference boundary SH to the distance HTW in the axial direction from the equator plane CL to the tread reference end TE is not less than 0.94 and not greater than 0.98.

In the tire 2, generation of compressive strain is suppressed, and the tread 4 at the shoulder portion is formed with an appropriate thickness. The tire 2 can achieve reduction of rolling resistance.

As described above, in the tread 4 of the tire 2, the cap portion 34 is formed from a crosslinked rubber for which wear resistance and grip performance are taken into consideration. In the tire 2, it is not necessary to replace the crosslinked rubber of the cap portion 34 with a low loss rubber in order to reduce rolling resistance. The tire 2 can achieve reduction of rolling resistance without decreasing grip performance on a wet road surface.

In FIG. 2, a length indicated by reference character t is the distance in the radial direction from the equator PC to the reference ground-contact position PG.

In the tire 2, the ratio (t/HTW) of the distance t in the radial direction from the equator PC to the reference ground-contact position PG to the distance HTW in the axial direction from the equator plane CL to the tread reference end TE is preferably not less than 0.06 and not greater than 0.15.

When the ratio (t/HTW) is set to be not less than 0.06, the tread surface 24 does not become excessively flat, and the tread 4 at the shoulder portion can be formed with an appropriate thickness in the tire 2. A local increase in ground-contact pressure is suppressed, so that occurrence of uneven wear is suppressed. In the tire 2, good uneven wear resistance is maintained. From this viewpoint, the ratio (t/HTW) is more preferably not less than 0.10.

When the ratio (t/HTW) is set to be not greater than 0.15, generation of compressive strain is effectively suppressed. The tire 2 can achieve further reduction of rolling resistance. From this viewpoint, the ratio (t/HTW) is more preferably not greater than 0.12.

In the tire 2, the ratio (Rm/Rs) of the radius Rm of the middle arc to the radius Rs of the side arc is preferably not less than 2.1 and not greater than 2.7.

When the ratio (Rm/Rs) is set to be not less than 2.1, generation of compressive strain is effectively suppressed. The tire 2 can achieve further reduction of rolling resistance. From this viewpoint, the ratio (Rm/Rs) is more preferably not less than 2.3.

When the ratio (Rm/Rs) is set to be not greater than 2.7, slip of the tread surface 24 against a road surface is suppressed, and the tread 4 at the shoulder portion is formed with an appropriate thickness. In the tire 2, good uneven wear resistance is maintained. From this viewpoint, the ratio (Rm/Rs) is more preferably not greater than 2.5.

In the tire 2, the ratio (Rc/Rm) of the radius Rc of the center arc to the radius Rm of the middle arc is preferably not less than 4.0 and not greater than 5.5.

When the ratio (Rc/Rm) is set to be not less than 4.0, generation of compressive strain is effectively suppressed. The tire 2 can achieve further reduction of rolling resistance. From this viewpoint, the ratio (Rc/Rm) is more preferably not less than 4.2.

When the ratio (Rc/Rm) is set to be not greater than 5.5, slip of the tread surface 24 against a road surface is suppressed, and the tread 4 at the shoulder portion is formed with an appropriate thickness. In the tire 2, good uneven wear resistance is maintained. From this viewpoint, the ratio (Rm/Rs) is more preferably not greater than 5.3.

In the tire 2, the ratio (Rs/Rsh) of the radius Rs of the side arc to the radius Rsh of the shoulder arc is preferably not less than 10 and not greater than 20.

When the ratio (Rs/Rsh) is set to be not less than 10, generation of compressive strain is effectively suppressed. The tire 2 can achieve further reduction of rolling resistance. From this viewpoint, the ratio (Rs/Rsh) is more preferably not less than 13.

When the ratio (Rs/Rsh) is set to be not greater than 20, slip of the tread surface 24 against a road surface is suppressed, and the tread 4 at the shoulder portion is formed with an appropriate thickness. In the tire 2, good uneven wear resistance is maintained. From this viewpoint, the ratio (Rs/Rsh) is more preferably not greater than 17.

As described above, according to the invention, a tire that can achieve reduction of rolling resistance without decreasing grip performance on a wet road surface is obtained.

### EXAMPLES

Hereinafter, the present invention will be described in further detail by means of examples, etc., but the present invention is not limited to these examples.

### [Example 1]

A pneumatic tire for a passenger car (tire size = 205/55R19) having the basic structure shown in FIG. 1 was obtained.

By adjusting the contour line of the tread surface, the ratio (L/HTW), the ratio (t/HTW), and the ratio (Rm/Rs) were set as shown in Table 1 below.

The ratio (HGW/HTW) of the distance HGW in the axial direction from the equator plane to the reference ground-contact position PG to the reference width HTW of the tread was 0.88. In Example 1, the reference boundary SH was located axially outward of the reference ground-contact position PG.

The cap portion of the tread was formed from a crosslinked rubber for which grip performance on a wet road surface was taken into consideration, instead of a low loss rubber.

### [Comparative Example 1]

A tire of Comparative Example 1 is a conventional tire. The ratio (L/HTW), the ratio (t/HTW), and the ratio (Rm/Rs) in Comparative Example 1 are as shown in Table 1 below. The ratio (HGW/HTW) of the distance HGW in the axial direction from the equator plane to the reference ground-contact position PGc to the reference width HTW of the tread was 0.88. In Comparative Example 1, the reference boundary SHc was located axially inward of the reference ground-contact position PGc. The basic structure of Comparative Example 1 is the same as that of Example 1.

### [Examples 2 to 7 and Comparative Examples 2 and 3]

By adjusting the contour line of the tread surface, the ratio (L/HTW), the ratio (t/HTW), and the ratio (Rm/Rs) were set as shown in Table 1 below, and tires of Examples 2 to 7 and Comparative Examples 2 and 3 were obtained. In each of these tires, the ratio (HGW/HTW) was 0.88. The basic structures of Examples 2 to 7 and Comparative Examples 2 and 3 are the same as that of Example 1.

### [Rolling Resistance]

Using a rolling resistance testing machine, a rolling resistance coefficient (RRC) was measured when a test tire ran on a drum at a speed of 80 km/h under the following conditions. The results are shown as indexes in the cells for "RRC" in Tables 1 and 2 below with the result of Comparative Example 1 being regarded as 100. The higher the value is, the lower the rolling resistance of the tire is.
Rim: 16×6.5J
Internal pressure: 210 kPa
Vertical load: 4.82 kN

### [Uneven Wear Resistance]

A test tire was fitted onto a rim (size = 16×7.0J) and inflated with air to adjust the internal pressure thereof to 250 kPa. The tire was mounted to a wear energy measuring device. A camber angle was set to 0°, a slip angle was set to 0°, and the wear energy of the tire was measured. A ratio (Ec/Es) was obtained as an index of uneven wear resistance from wear energy Ec at the equator plane and wear energy Es at the ground-contact end. The results are shown as indexes in the cells for "Uneven wear resistance" in Tables 1 and 2 below with the result of Comparative Example 1 being regarded as 100. The lower the value is, the better the uneven wear resistance is.

**[Table 1]**

| | Comparative Example 1 | Comparative Example 2 | Example 2 | Example 1 | Example 3 | Comparative Example 3 |
|---|---|---|---|---|---|---|
| L/HTW [-] | 0.86 | 0.93 | 0.94 | 0.97 | 0.98 | 0.99 |
| t/HTW [-] | 0.10 | 0.12 | 0.12 | 0.12 | 0.12 | 0.12 |
| Rm/Rs [-] | 2.0 | 2.5 | 2.5 | 2.5 | 2.5 | 2.5 |
| RRC | 100 | 100 | 101 | 105 | 103 | 100 |
| Uneven wear resistance | 100 | 100 | 100 | 100 | 100 | 100 |

**[Table 2]**

| | Example 4 | Example 5 | Example 6 | Example 7 |
|---|---|---|---|---|
| L/HTW [-] | 0.97 | 0.97 | 0.97 | 0.97 |
| t/HTW [-] | 0.1 | 0.15 | 0.12 | 0.12 |
| Rm/Rs [-] | 2.5 | 2.5 | 2.1 | 2.7 |
| RRC | 102 | 102 | 103 | 101 |
| Uneven wear resistance | 100 | 100 | 100 | 100 |

As shown in Tables 1 and 2, in each Example, reduction of rolling resistance is achieved without using a low loss rubber for the cap portion. That is, in each Example shown in Tables 1 and 2, reduction of rolling resistance is achieved without decreasing grip performance on a wet road surface. From the evaluation results, advantages of the present invention are clear.

The above-described technology capable of reducing rolling resistance without using a low loss rubber can also be applied to various tires.

## Claims

1. A tire (2) comprising:
a pair of beads (10);
a carcass (12) extending on and between the pair of beads (10);
a pair of sidewalls (6) located axially outward of the carcass (12);
a tread (4) located radially outward of the carcass (12); and
a belt (14) located between the carcass (12) and the tread (4), wherein
an outer surface (2G) of the tire (2) includes a tread surface (24) configured to come into contact with a road surface, and a pair of side surfaces (26) connected to the tread surface (24),
the tread surface (24) includes an equator (PC) that is a point of intersection with an equator plane (CL),
each of the side surfaces (26) includes a maximum width position (PW) at which the tire (2) has a maximum width,
in a meridian cross-section of the tire (2), a contour line of the tread surface (24) includes a plurality of arcs aligned in an axial direction,
the plurality of arcs include a center arc passing through the equator (PC), a pair of middle arcs connected to the center arc, a pair of side arcs connected to the middle arcs, respectively, and a pair of shoulder arcs connected to the side arcs, respectively,
contour lines of the pair of side surfaces (26) are connected to the pair of shoulder arcs, respectively,
a point of intersection of a tangent line (LSH) tangent to the shoulder arc at a first end (SH) of the shoulder arc and a tangent line (LHU) tangent to the shoulder arc (HU) at a second end of the shoulder arc is a tread reference end (TE),
a ground-contact end obtained by fitting the tire (2) onto a standardized rim (R), adjusting an internal pressure of the tire (2) to a standardized internal pressure, applying a load that is 80% of a standardized load, to the tire (2), and bringing the tire (2) into contact with a flat surface is a reference ground-contact end (GE),
a position, on the outer surface (2G) of the tire (2), corresponding to the reference ground-contact end (GE) is a reference ground-contact position (PG),
a boundary between the shoulder arc and the side arc is a reference boundary (SH),
the reference boundary (SH) is located axially outward of the reference ground-contact position (PG), and
**characterized in that**
a ratio (L/HTW) of a distance (L) in the axial direction from the equator plane (CL) to the reference boundary (SH) to a distance (HTW) in the axial direction from the equator plane (CL) to the tread reference end (TE) is not less than 0.94 and not greater than 0.98; and
a ratio (t/HTW) of a distance (t) in a radial direction from the equator (PC) to the reference ground-contact position (PG) to the distance (HTW) in the axial direction from the equator plane (CL) to the tread reference end (TE) is not less than 0.06 and not greater than 0.15.

2. The tire (2) according to claim 1, wherein a ratio (Rm/Rs) of a radius (Rm) of the middle arc to a radius (Rs) of the side arc is not less than 2.1 and not greater than 2.7.

## Patentansprüche

1. Reifen (2), umfassend:
ein Paar Wülste (10);
eine Karkasse (12), die sich auf und zwischen dem Paar Wülsten (10) erstreckt;
ein Paar Seitenwände (6), die axial außen von der Karkasse (12) angeordnet sind;
eine Lauffläche (4), die radial außen von der Karkasse (12) angeordnet ist; und
einen Gürtel (14), der zwischen der Karkasse (12) und der Lauffläche (4) angeordnet ist, wobei
eine Außenfläche (2G) des Reifens (2) eine Laufflächen-Oberfläche (24), die konfiguriert ist, um mit einer Straßenoberfläche in Kontakt zu kommen, und ein Paar Seitenflächen (26), die mit der Laufflächen-Oberfläche (24) verbunden sind, umfasst,
die Laufflächen-Oberfläche (24) einen Äquator (PC) umfasst, der ein Schnittpunkt mit einer Äquatorebene (CL) ist,
jede der Seitenflächen (26) eine Position maximaler Breite (PW) umfasst, an der der Reifen (2) eine maximale Breite aufweist,
in einem Meridianquerschnitt des Reifens (2) eine Konturlinie der Laufflächen-Oberfläche (24) eine Vielzahl von Bögen umfasst, die in einer axialen Richtung ausgerichtet sind,
die Vielzahl von Bögen einen Zentralbogen, der durch den Äquator (PC) verläuft, ein Paar Mittelbögen, die mit dem Zentralbogen verbunden sind, ein Paar Seitenbögen, die jeweils mit den Mittelbögen verbunden sind, und ein Paar Schulterbögen, die jeweils mit den Seitenbögen verbunden sind, umfasst,
Konturlinien des Paars Seitenflächen (26) jeweils mit dem Paar Schulterbögen verbunden sind,
ein Schnittpunkt einer Tangentenlinie (LSH), die zu dem Schulterbogen an einem ersten Ende (SH) des Schulterbogens tangential ist, und einer Tangentenlinie (LHU), die zu dem Schulterbogen (HU) an einem zweiten Ende des Schulterbogens tangential ist, ein Laufflächenreferenzende (TE) ist,
ein Bodenkontaktende, das durch Aufziehen des Reifens (2) auf eine standardisierte Felge (R), Einstellen eines Innendrucks des Reifens (2) auf einen standardisierten Innendruck, Aufbringen einer Last, die 80 % einer standardisierten Last beträgt, auf den Reifen (2) und Inkontaktbringen des Reifens (2) mit einer flachen Oberfläche erhalten wird, ein Referenzbodenkontaktende (GE) ist,
eine Position auf der Außenfläche (2G) des Reifens (2), die dem Referenzbodenkontaktende (GE) entspricht, eine Referenzbodenkontaktposition (PG) ist,
eine Grenze zwischen dem Schulterbogen und dem Seitenbogen eine Referenzgrenze (SH) ist,
die Referenzgrenze (SH) axial außen von der Referenzbodenkontaktposition (PG) angeordnet ist, und
**dadurch gekennzeichnet, dass**
ein Verhältnis (L/HTW) eines Abstands (L) in der axialen Richtung von der Äquatorebene (CL) zu der Referenzgrenze (SH) zu einem Abstand (HTW) in der axialen Richtung von der Äquatorebene (CL) zu dem Laufflächenreferenzende (TE) nicht kleiner als 0,94 und nicht größer als 0,98 ist, und
ein Verhältnis (t/HTW) eines Abstands (t) in einer radialen Richtung von dem Äquator (PC) zu der Referenzbodenkontaktposition (PG) zu dem Abstand (HTW) in der axialen Richtung von der Äquatorebene (CL) zu dem Laufflächenreferenzende (TE) nicht kleiner als 0,06 und nicht größer als 0,15 ist.

2. Reifen (2) nach Anspruch 1, wobei ein Verhältnis (Rm/Rs) eines Radius (Rm) des Mittelbogens zu einem Radius (Rs) des Seitenbogens nicht kleiner als 2,1 und nicht größer als 2,7 ist.

## Revendications

1. Pneumatique (2) comprenant :
une paire de talons (10) ;
une carcasse (12) s'étendant sur et entre la paire de talons (10) ;
une paire de parois latérales (6) situées axialement à l'extérieur de la carcasse (12) ;
une bande de roulement (4) située radialement à l'extérieur de la carcasse (12) ; et
une ceinture (14) située entre la carcasse (12) et la bande de roulement (4), dans lequel
une surface extérieure (2G) du pneumatique (2) inclut une surface de bande de roulement (24) configurée pour venir en contact avec une surface routière, et une paire de surface latérales (26) connectées à la surface de bande de roulement (24),
la surface de bande de roulement (24) inclut un équateur (PC) qui est un point d'intersection avec un plan d'équateur (CL),
chacune des surfaces latérales (26) inclut une position de largeur maximum (PW) à laquelle le pneumatique (2) a une largeur maximum,
dans une section transversale méridienne du pneumatique (2), une ligne de contour de la surface de bande de roulement (24) inclut une pluralité d'arcs alignés dans une direction axiale,
la pluralité d'arcs incluent un art central passant à travers l'équateur (PC), une paire d'arcs médians connectés à l'arc central, une paire d'arcs latéraux connectés aux arcs médians, respectivement, et une paire d'arcs d'épaulement connectés aux arcs latéraux, respectivement,
des lignes de contour de la paire de surfaces latérales (26) sont connectées à la paire d'arcs d'épaulement, respectivement,
un point d'intersection d'une ligne tangente (LSH) tangente à l'arc d'épaulement au niveau d'une première extrémité (SH) de l'arc d'épaulement et une ligne tangente (LHU) tangente à l'arc d'épaulement (HU) au niveau d'une seconde extrémité de l'arc d'épaulement est une extrémité de référence de bande de roulement (TE),
une extrémité de contact au sol obtenue en montant le pneumatique (2) sur une jante standardisée (R), en ajustant une pression interne du pneumatique (2) à une pression interne standardisée, en appliquant une charge, qui est de 80 % d'une charge standardisée, sur le pneumatique (2), et en amenant le pneumatique (2) en contact avec une surface plate est une extrémité de contact au sol de référence (GE),
une position, sur la surface extérieure (2G) du pneumatique (2), correspondant à l'extrémité de contact au sol de référence (GE) est une position de contact au sol de référence (PG),
une frontière entre l'arc d'épaulement et l'arc latéral est une frontière de référence (SH),
la frontière de référence (SH) est située axialement à l'extérieur de la position de contact au sol de référence (PG), et
**caractérisé en ce que**
un rapport (L/HTW) d'une distance (L) dans la direction axiale depuis le plan d'équateur (CL) jusqu'à la frontière de référence (SH) sur une distance (HTW) dans la direction axiale depuis le plan d'équateur (CL) jusqu'à l'extrémité de référence de bande de roulement (TE) n'est pas inférieur à 0,94 et n'est pas supérieur à 0,98 ; et
un rapport (t/HTW) d'une distance (t) dans une direction radiale depuis l'équateur (PC) jusqu'à la position de contact au sol de référence (PG) sur la distance (HTW) dans la direction axiale depuis le plan d'équateur (CL) jusqu'à l'extrémité de référence de bande de roulement (TE) n'est pas inférieur à 0,06 et n'est pas supérieur à 0,15.

2. Pneumatique (2) selon la revendication 1, dans lequel un rapport (Rm/Rs) d'un rayon (Rm) de l'arc médian sur un rayon (Rs) de l'arc latéral n'est pas inférieur à 2,1 et n'est pas supérieur à 2,7.
